**Europäisches Patentamt**

**European Patent Office**

**Office européen des brevets**

(19)

(11) **EP 1 333 175 A2**

(12) **EUROPÄISCHE PATENTANMELDUNG**

(43) Veröffentlichungstag:
06.08.2003 Patentblatt 2003/32

(51) Int Cl.⁷: **F03G 3/00**

(21) Anmeldenummer: 03002000.2

(22) Anmeldetag: 31.01.2003

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **01.02.2002 US 353307 P**

(71) Anmelder: **Gräff, Roderich Wilhelm, Dr.-Ing.
78126 Königsfeld (DE)**

(72) Erfinder: **Gräff, Roderich Wilhelm, Dr.-Ing.
78126 Königsfeld (DE)**

(74) Vertreter: **Neymeyer, Franz, Dipl.-Ing. (FH)
Haselweg 20
78052 Villingen-Schwenningen (DE)**

(54) **Schwerkraftantriebsmaschine**

(57)  Die Erfindung befasst sich mit der Erzeugung und Auswertung von Energie. Insbesondere befasst sie sich mit einem Verfahren und Vorrichtungen zur Erzeugung von Temperaturunterschieden in gasförmigen, flüssigen oder festen Körpern in geschlossenen Systemen unter dem Einfluss von Schwerkraft, und der Benutzung dieser Temperaturunterschiede zur Erzeugung nutzbarer Energie. Ein Temperaturunterschieds-Element, wahlweise ein fester Körper, eine Flüssigkeit oder ein Gas, ist senkrecht in einer Kammer, umgeben von einem Gehäuse, angeordnet. Die Kammer und das Gehäuse können wahlweise mit Fasern, Pulver oder kleinen Körpern gefüllt sein, um den Einfluss von Konvektionsströmen und Wärmestrahlung zu minimieren. Unter dem Einfluss der Schwerkraft wird das obere Ende des Temperaturunterschieds-Elements kälter und das untere Ende wärmer. Mittels eines Thermoelements kann auf Grund dieses Temperaturunterschieds elektrischer Strom erzeugt werden, oder mittels eines Wärmetauschers können Wärmeströme mit unterschiedlichen Temperaturen dem Temperaturunterschieds-Element entnommen werden.

Fig. 1

Printed by Jouve, 75001 PARIS (FR)

## Beschreibung

Die Erfindung befasst sich mit der Erzeugung und Auswertung von Energie. Insbesondere befasst sie sich mit einem Verfahren und Vorrichtungen zur Erzeugung von Temperaturunterschieden in gasförmigen, flüssigen oder festen Körpern in geschlossenen Systemen unter dem Einfluss von Schwerkraft und der Benutzung dieser Temperaturunterschiede zur Erzeugung nutzbarer Energie. Energie wird ausnutzbar, wenn man zwei Körper mit einem hinreichend großen Temperaturunterschied hat. Typischerweise erzeugt man einen derartigen Unterschied, indem man den einen Körper mittels eines Brennstoffes wie Gas oder Öl erhitzt. Alle bekannten Methoden zur Erzeugung von Temperaturunterschieden benötigen die Zuführung von irgendeiner Art von Energie

In Übereinstimmung mit der Erfindung wurde herausgefunden, dass man in einer erfindungsgemäßen Vorrichtung derartige Temperaturunterschiede in einem geschlossenen System auch ohne Zuführung von Energie erzeugen kann, was eine Verringerung der Entropie zur Folge hat. Die so erzeugten Temperaturunterschiede können zur Leistung von Arbeit außerhalb des geschlossenen Systems benutzt werden.

Die vorliegende Erfindung bezieht sich auf ein Verfahren und eine Vorrichtung zur Erzeugung von Temperaturunterschieden in gasförmigen, flüssigen oder festen Körpern in geschlossenen Systemen unter dem Einfluss der Schwerkraft. Die Temperaturunterschiede können benutzt werden, um Energie in Form von Strom oder Wärme zu liefern. Die Erfindung bezieht sich auch auf eine Vorrichtung, um die Temperatureinflüsse des Umfeldes auf das geschlossene System zu verringern.

In einer Ausführung der Erfindung wird ein Temperaturunterschiedselement, bevorzugt ein fester Körper, eine Flüssigkeit oder ein Gas, senkrecht angeordnet in einer Kammer innerhalb eines Gehäuses. Die Kammer kann wahlweise evakuiert oder mit Fasern, Pulvern oder kleinen Kugeln ausgefüllt sein oder andere Anordnungen haben, um den Einfluss von Konvektionsströmen oder von Wärmestrahlung zu minimieren. Unter dem Einfluss der Schwerkraft wird das obere Ende des Temperaturunterschiedselements am oberen Ende kälter als am unteren Ende. Von dieser Temperaturdifferenz ausgehend, kann ein Thermoelement zur Erzeugung von elektrischer Energie benutzt werden oder ein Wärmetauscher zur Fortleitung dieses Temperaturunterschieds durch einen Wärmeträger nach außen.

Anhand der Zeichnungen wird die Erfindung im folgenden näher erläutert. Es zeigt

Fig. 1 eine Vorrichtung zur Darstellung der Methode der Erfindung;

Fig. 2 eine Anordnung der Erfindung mit einem Festkörper als Temperaturunterschiedselement;

Fig. 3 eine weitere Anordnung der Erfindung, in der die Kammer in einem Vakuum angeordnet ist;

Fig. 4 eine weitere Anordnung der Erfindung, in der die Kammer eine Anzahl horizontal angeordneter Filme enthält;

Fig. 5 eine erfindungsgemäße Vorrichtung zur Verringerung der Einflüsse der Temperaturunterschiede des Umfelds des geschlossenen Systems;

Fig. 6 eine weitere erfindungsgemäße Vorrichtung, in der Dewargefäße benutzt werden zur Verringerung der Temperatureinflüsse von außerhalb des geschlossenen Systems und in der Wärmetauscher zur Herausführung der Energie erfindungsgemäß eingesetzt sind;

Fig. 7 eine Anordnung zur Erreichung höherer Temperaturunterschiede, und

Fig. 8 einen senkrechten Schnitt entlang der Linie 8-8 von Fig. 5.

## Detaillierte Beschreibung der Erfindung

Die Methode der Erfindung beinhaltet den Schritt, Atome oder Moleküle dem Einfluss der Schwerkraft in einem geschlossenen System in vertikaler Anordnung auszusetzen.

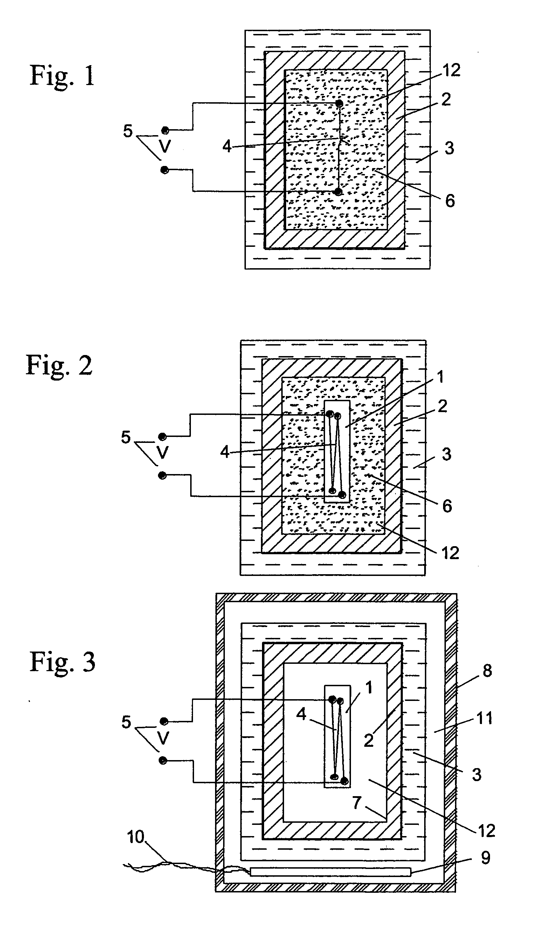

Auf Grund der Tendenz, dass warme Luft aufsteigt und kalte Luft abwärts strömt, hat ein Raum der beheizt oder gekühlt wird, in seinen oberen Bereichen eine höhere Temperatur als in den unteren. Typischerweise beträgt die Temperaturdifferenz über die Höhe etwa 1 K/m. Selbst wenn der Bleistab 1, wie in Fig. 2 gezeigt, sehr gut von dem Umfeld isoliert ist, müsste man daher annehmen, dass er im oberen Teil eine höhere Temperatur zeigt als im unteren. Tatsächlich stellt sich jedoch im Gegensatz hierzu heraus, dass nach Erreichen eines Gleichgewichtszustandes der Bleistab 1 oben kälter ist als unten. Die Methode der Erfindung basiert auf dieser unerwarteten Feststellung.

Gemäß Fig. 1 enthält das längliche Gefäß 2 ein Gas wie z.B. Luft in senkrechter Anordnung. Die Luftmoleküle bewegen sich regellos innerhalb dieser Kammer in einer Bewegung, die Brown'sche Bewegung genannt wird. Selbst ein geschlossenes System unterliegt jedoch der Wirkung der Schwerkraft. Die Wirkung der Schwerkraft bremst ein Molekül, das sich aufwärts bewegt, ab und beschleunigt es auf dem Weg nach unten. Das bedeutet, dass Moleküle im oberen teil des Gefäßes im Durchschnitt eine kleinere Geschwindigkeit und damit eine geringere kinetische Energie haben als die Moleküle im unteren Teil. Die Temperatur einer Anzahl von Molekülen (z.B. Moleküle eines Gases) verhält sich proportional zur durchschnittlichen Geschwindigkeit bzw. der kinetischen Energie dieser Moleküle. Daher ist die Temperatur im oberen Teil des Gefäßes geringer als im unteren Bereich. Beim Auftreffen auf die obere und untere Wand nehmen die Moleküle die Temperatur der Wand an, d.h. sie kühlen die obere und heizen die untere Wand. Hierdurch transportieren sie Energie von oben nach unten und erzeugen daher in der oberen Wand eine geringere Temperatur als in der unteren. Diese Temperaturdifferenz wird in der Erfindung benutzt, um Arbeit außerhalb des geschlossenen Systems zu leisten.

In Flüssigkeiten oder Gasen innerhalb eines Gefäßes zeigt eine Ansammlung warmer Moleküle die Tendenz aufzusteigen und kalter Moleküle zu fallen, bedingt durch ihre unterschiedlichen Dichten, die sich proportional zu ihren Temperaturen verhalten. Diese Bewegung wird "Konvektion" genannt. Der Einfluss der Konvektion hat die Tendenz, den durch die Schwerkraft bedingten Energietransport von oben nach unten herabzusetzen. Erfindungsgemäß wird daher wahlweise das Gefäß z.B. mit sehr feinen Fasern 6, z. B. aus Glas, Naturmaterialien oder Kunststoff als Massiv- oder Hohlfaser, mit Pulver, Schaum oder kleinen massiven oder hohlen Körpern, z.B. aus Kunststoff, Metall oder Glas, gefüllt, um Konvektionsströme oder Wärmestrahlung von Wand zu Wand zu minimieren. Dies mag überflüssig sein bei der Benutzung von hochviskosen Flüssigkeiten oder Körpern wie z.B. Schwerölen, Vaseline, Petroleum Jelly oder Gelatine.

Bei Benutzung von Gasen kann es hilfreich sein, im Gefäß 2 den Druck so herabzusetzen, dass die freie Weglänge eines darin befindlichen Moleküls größer wird als die Innenabmessungen des Gefäßes. Unter diesen Bedingungen fliegt eine Molekül von Wand zu Wand, ohne mit einem anderen Molekül zusammenzustoßen. Bei Herabsetzung des Drucks auf z.B. 0,00001 mbar beträgt z. B. bei Luft die freie Weglänge 6 m bei einer Temperatur von 20 C. Bei einem Gefäß mit Innenabmessungen von 1 m würden somit die Moleküle direkt von Wand zu Wand fliegen.

In einer anderen Anordnung der Erfindung enthält das Gefäß 2 ein Gas mit einem geringeren Druck, wobei das Gefäß in eine Vielzahl von kleineren Räumen durch horizontal angeordnete Filme, z. B. aus Metall oder Kunststoff, unterteilt ist. Hierdurch wird erreicht, dass Gase und Drücke gewählt werden können, bei denen die Moleküle selbst bei kleineren freien Weglängen direkt von Wand zu Wand fliegen. Dies hat den Vorteil, dass sich bei einem höheren Gasdruck und, dadurch bedingt, einer höheren Anzahl von Molekülen pro Volumenelement die Menge der von Wand zu Wand transportierten Energie vergrößert, da diese sich proportional zum Gasdruck verhält.

Das Gegenteilige, nämlich den Druck eines Gases stark zu vergrößern, zeigt den gleichen vorteilhaften Effekt, dass sich die Menge der von oben nach unten transportierten Energie vergrößert, selbst bei Gasen, deren freie Weglänge wesentlich kleiner ist als die Innenabmessungen des Gefäßes.

Die Temperaturdifferenz zwischen oben und unten kann ausgerechnet werden, da sie sich proportional verhält zur potentiellen Energie der Moleküle zwischen oben und unten wie folgt:

$$E = W \cdot H$$

wobei E die potentielle Energie, W das Gewicht und H der vertikale Abstand ist.

Diese Energiemenge entspricht einer Temperaturerhöhung der jeweiligen Masse.

$$E = M \cdot c(Gr) \cdot T(Gr),$$

wobei c(Gr) die spezifische Wärme c (bei Gasen $c_v$) dividiert durch n ist, wobei n die Anzahl der Freiheitsgrade darstellt, T(Gr) ist der Temperaturunterschied zwischen den zwei Enden des senkrechten Körpers und M die Masse des Moleküls.

Daher:

$$W \cdot H = M \cdot c(Gr) \cdot T(Gr) \text{ oder } T(Gr) = W/M \cdot H/c(Gr)$$

und mit W/M = g wird

$$T(Gr) = - g \cdot H / c(Gr) \quad (\text{-, da die Schwerkraft entgegen der Richtung von H wirkt})$$

Entsprechend Tabelle 1 kann man gemäß dieser Formel die Temperaturunterschiede T(Gr) für unterschiedliche Atome und Moleküle ausrechnen, in der Tabelle bezogen auf eine Höhe von 1 Meter.

Tabelle 1:

| Material | Aluminium | Blei | H$_2$O | Glas | Quecksilber | Xenon | Jodgas | Luft |
|---|---|---|---|---|---|---|---|---|
| Spez. Wärme (m$^2$/ sec$^2$, K) | 900 | 130 | 4185 | 800 | 140 | 160 | 140 | 718 |
| T(Gr) | -0,009 | -0,08 | -0,04 | -0,009 | -0,06 | -0,311 | -0,355 | -0,07 |
| (K/m) | | | | | | | | |

Fig. 1 zeigt die einfachste Ausführungsform der Erfindung. Das Gehäuse 2, z.B. hergestellt aus Aluminiumplatten mit einer Dicke von etwa 20 mm, hat einen Innenraum oder eine zentrale Kammer 12, die mit einem Gas oder einer Flüssigkeit gefüllt ist. Das massive Gehäuse hilft, die Temperatur auf der Innenseite des Gehäuses so weit wie möglich zu vergleichmäßigen. Das Gehäuse ist vom Umfeld durch das Material 3 isoliert, wie z.B. durch Polystrol-schaum in einer Dicke von etwa 50 cm. Bevorzugt wird die Kammer 12 gefüllt mit einer Menge von feinen Fasern 6, z. B. aus Glas, Naturmaterialien oder Kunststoff als Massiv-oder Hohlfaser, mit Pulver, Schaum oder kleinen massiven oder hohlen Körpern, z.B. aus Kunststoff, Metall oder Glas, um Konvektionsströme innerhalb der Kammer oder Wärmestrahlung von Wand zu Wand zu minimieren.

In Fig. 1 misst das Thermoelement 4 den Temperaturunterschied zwischen dem oberen und dem unteren Rand des Temperaturunterschiedselements, z.B. eines Gases (oder einen Teil der senkrechten Erstreckung). Die Drähte 5 übertragen die Spannung (V+/-) von dem Thermoelement 4 zur Außenseite der Kammer 12. Bei Benutzung von z.B. einem Thermoelement E besteht ein Arm des Thermoelements aus Kupfer/Nickel und der andere aus Nickel/Chrom. Bei dem System der Erfindung erhält man hiermit eine Spannung von 70mV pro 100° C. Um die Verwertbarkeit der Spannung zu vergrößern, kann man alternativ eine große Anzahl von Thermoelementen in Reihe anordnen wie in einer Thermosäule, wie schematisch in Fig. 2 und 3 dargestellt. Bei einer Reihenanordnung von 100 Thermoelementen würde man die Spannung im obigen Beispiel auf 7 V/100° C erhöhen.

Wie in Tabelle 1 berechnet, misst man Temperaturunterschiede zwischen dem oberen und dem unteren Ende des Temperaturunterschieds-Elements bei einer Höhe von 1 m von etwa 0,01 - 0,3 K. Dieser Temperaturunterschied hängt ab vom spezifischen Gewicht und der Gewichtsverteilung der Gasmoleküle, der Glaswolle und dem Material des Gehäuses. Die Wahl der Materialien kann ein Fachmann, basierend auf den hier angegebenen Einflussgrößen, sinnvoll aussuchen, um eine möglichst große Temperaturdifferenz zu erzielen.

Gemäß Fig. 2 ist ein Bleistab 1 mit einem Durchmesser von etwa 50 mm und einer Länge von etwa 1000 mm in vertikaler Stellung innerhalb des Gehäuses 2 angeordnet und stellt somit das Temperaturunterschieds-Element dar. Das Gehäuse 2 ist bei diesem Beispiel in einem Durchmesser von 230 mm und einer Höhe von 1200 mm ausgeführt. Der Raum zwischen dem Stab 1 und dem Gehäuse 2 ist mit losen Glasfasern 6 ausgefüllt.

Obgleich die Höhe der Kammer in diesem Beispiel wesentlich größer gezeigt wird als deren Breite oder Tiefe, so sind diese Abmessungsverhältnisse keine Voraussetzung für die Erfindung. Die Höhe der Kammer bestimmt nur die maximal möglichen Temperaturunterschied, während von der Gesamtmasse des Temperaturunterschieds-Elements das Maximum an Energie bestimmt wird, die von oben nach unten transportiert werden kann.

Bei Benutzung eines Bleistabs 1 in Fig. 2 im Gegensatz zu einem Gas oder einer Flüssigkeit kann gemäß Tabelle 1 vorhergesagt werden, dass ein größerer Temperaturunterschied entsteht, basierend auf der geringeren spezifischen Wärme von Blei, verglichen mit einem typischen Gas.

Eine weitere Vergrößerung der Wirkung der Erfindung kann wahlweise herbeigeführt werden durch Verlängerung des Stabes 1 und durch Kombination einer Reihe von Temperaturunterschiedselementen in einer Installation.

Alternativ kann man, wie in Fig. 3 dargestellt, den Raum innerhalb des Gehäuses 2, in dem ein massiver Stab 1 angeordnet ist, evakuieren und die inneren Oberflächen 7 des Gehäuses mit hoch Wärme reflektierenden Oberflächen versehen, um den Stab 1 möglichst gut vom Umfeld zu isolieren und Wärmestrahlung zwischen Stab und Wand zu minimieren.

Wie in Fig. 3 dargestellt, ist die in Fig. 2 dargestellte Vorrichtung wahlweise von einem zusätzlichen Gehäuse 8 umgeben, das auf einer möglichst konstanten Temperatur durch ein thermostatisch geregeltes Heizsystem 9 gehalten wird., das von außen her über die elektrischen Verbindungen 10, einen Flüssigkeitsträger o.ä. beheizt wird. Eine Verbesserung der Wärmeisolation kann wahlweise durch Evakuierung des Raumes 11 erzielt werden, der das isolierende Material 3 umgibt.

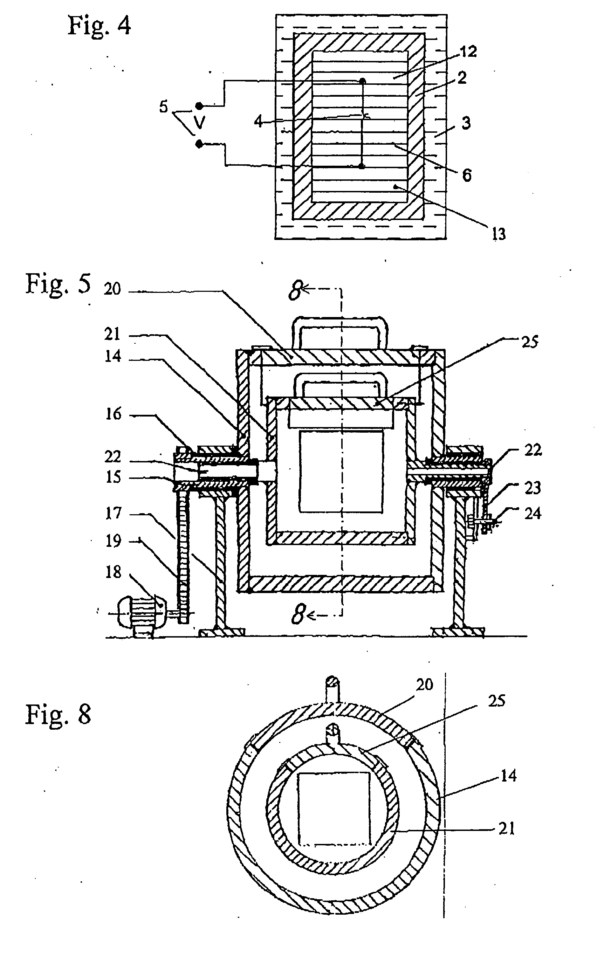

Wie in Fig. 4 dargestellt, wird das Gehäuse 2 wahlweise durch eine vertikale Reihe von horizontal angeordneten Filmen 13, z.B. aus Metall oder Kunststoff. in mehrere kleinere Räume 12 unterteilt. Bei Benutzung von z. B. zehn mit gleichem Abstand angeordneten Filmen 13 mit einem Abstand von jeweils 100 mm könnte man einen Druck des Gases von 0,0001 mbar wählen, was bei 20 C einer freien Weglänge von 0,6 m entspricht. Praktisch alle Moleküle würden hierbei von Wand zu Wand fliegen, und der höhere Druck hätte den Vorteil, dass die von oben nach unten transportierte Energiemenge proportional mit der Vergrößerung des Druckes ansteigt.

Es liegt darüber hinaus innerhalb des Umfanges der Erfindung, wahlweise das Gehäuse 2 einem zusätzlichen Kraftfeld auszusetzen, sei es in Form eines elektrischen, elektromagnetischen oder des Schwerkraftfeldes. Jegliche Art von festen, flüssigen oder gasförmigen Materialien kann wahlweise zur Erzeugung dieser Temperaturunterschiede benutzt werden, jedoch solche mit einer niedrigen spezifischen Wärme und/oder einer hohen Anzahl von Freiheitsgraden sind besonders vorteilhaft.

Um die Erfindung sinnvoll auszunutzen, sollte das Umfeld um die Vorrichtung herum eine möglichst konstante Temperatur haben. Dies ist schwierig zu erreichen, da im Umfeld, also z.B. in einem normalen Raum, typischerweise ein Temperaturgradient herrscht von etwa 1 K pro Meter Höhe. Um dieses Problem zu lösen, ist es ein weiterer Teil der Erfindung, alternativ eine Vorrichtung gemäß Fig. 5 und Fig. 8 zu benutzen. Fig. 5 zeigt einen rohrförmigen Körper 14 mit zwei seitlich angeordneten, koaxialen, horizontalen, hohlen Lagerzapfen 15. Diese sind in den Lagern 16 von Ständern 17 drehbar gelagert. Ein Motor 18 steht über eine Kette 19 mit einem der Lagerzapfen 15 in getrieblicher Verbindung, um die den Rohrkörper 14 drehend so anzutreiben, dass er sich um seine horizontale Achse etwa ein bis zehn Mal pro Minute dreht. Der Rohrkörper 14 ist bevorzugt aus einem Metall mit einer hohen Wärmeleitfähigkeit hergestellt, wie z.B. Aluminium, und hat bevorzugt eine relativ große Dicke wie z.B. 30 mm, so dass sich in dem Rohrkörper 14 relativ geringe Temperaturdifferenzen ausbilden. Durch die Rotation des Rohrkörpers 14 gleichen sich die Temperaturdifferenzen des Umfeldes von typischerweise etwa 1 K pro Meter Höhe auf eine viel kleinere Temperaturdifferenz im Rohrkörper 14 an.

Der Rohrkörper 14 hat einen Deckel 20, der einen Zugang zu einem Behälter 21 innerhalb des Rohrkörpers 14 erlaubt. Behälter 21 ist ebenfalls als Rohrkörper ausgebildet und mit zueinander koaxialen, horizontalen Lagerzapfen 22 versehen, die in den hohlen Lagerzapfen 15 drehbar gelagert sind. Während der Rohrkörper 14 um den Behälter 21 rotiert, wird letzterer stationär gehalten mittels eines Armes 23, der mit einem der Lagerzapfen 22 verbunden ist und durch einen Bolzen 24 am Ständer 17 in seiner Position fixiert ist.

Die Vorrichtungen gemäß Fig. 1 - 4 können innerhalb des Behälters 21 durch die Öffnungen der Deckel 20 und 25 hindurch installiert werden. Durch die Rotation des Rohrkörpers 14 stellen sich in dem Behälter 21 Temperaturdifferenzen von nur 0,01 K ein, gemessen über eine Höhe von 1 m zwischen oben und unten am Behälter 21. Hierdurch kann sich der Temperaturgradient, der durch den Einfluss der Schwerkraft entsteht, im Innenraum des Gehäuses 2 gemäß den Fig. 1 - 4 viel stärker ausbilden, da diese Temperaturdifferenz kaum noch negativ beeinflusst wird durch den hohen Temperaturgradienten des Raumes, in dem die Vorrichtung aufgestellt ist. Die Lagerzapfen 22 des Rohrkörpers 21 sind wahlweise hohl ausgeführt, damit Thermoelement-Drähte, die vom Gehäuse 2 kommen, nach aussen geführt und an ein Spannungsmessgerät oder einen Generator oder ähnliches angeschlossen werden können.

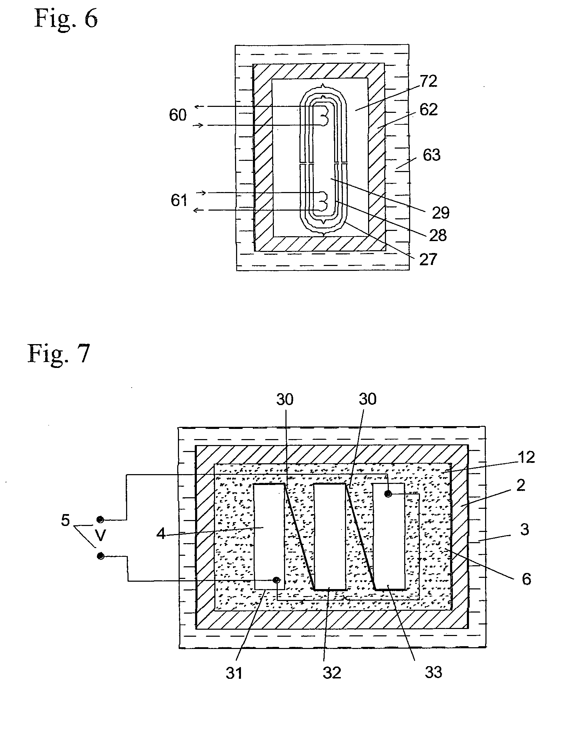

Fig. 6 zeigt die wahlweise Benutzung von zwei Dewargläsern 27 und 28. Dewargläser sind Glasgefäße mit zwei Wänden, die dem Fachmann bekannt sind. Der Hohlraum zwischen den zwei Glaswänden wird typischerweise auf einen Druck von 0,001 mbar evakuiert. Dies resultiert in einer sehr geringen Wärmeleitung zwischen den beiden Wänden. In Übereinstimmung mit der Erfindung bilden die Dewargläser das senkrecht angeordnete Gehäuse, das den Innenraum 29 einschließt und durch die Dewargläser außerordentlich gut vom Umfeld isoliert wird. Die Dewargläser sind angeordnet im Gehäuse 62, das außen von der Isolation 63 umgeben wird. Der Raum 72 zwischen den Dewargläsern 27 und dem Gehäuse 62 kann evakuiert oder mit Isolationsmaterial, wie Schaum, Fasern oder mit anderen hohlen oder massiven Teilchen angefüllt sein.

Fig. 6 zeigt die Anordnung von zwei Wärmetauschern 60 und 61 an Stelle der bisher gezeigten Thermoelemente. Dies ist eine alternative Methode, wie Energie in Form von Wärme oder Kälte nach außen abgeführt werden kann, indem eine Wärmetauschflüssigkeit durch die Wärmetauscher fließt. Der Wärmetauscher 60 kühlt den ihn durchfließenden Wärmeträger, der Wärmetauscher 61 erwärmt ihn. Die von den Wärmetauschern 60 und 61 nach außen transportierte Energie kann direkt benutzt werden, etwas zu wärmen oder zu kühlen, z.B. eine Raumheizung oder einen Kühlschrank oder kann die Wärmeenergie liefern, um eine durch Wärme betriebene Vorrichtung wie z.B. einen Sterlingmotor anzutreiben. In dieser Anordnung arbeiten die Temperaturunterschiedselement wie die Pumpe einer Wärmepumpe, die Energie vom Wärmetauscher 60 zum Wärmetauscher 61 transferiert.

Um wirtschaftlich elektrische Energie oder Wärmeträger mit unterschiedlichen Temperaturen zu erzeugen, ist es vorteilhaft, einen möglichst hohen Temperaturunterschied in dem Temperaturunterschiedselement zu erzielen. Diesen höheren Temperaturunterschied durch eine Vergrößerung der senkrechten Länge des Temperaturunterschiedselements zu erreichen, ist oft aus räumlichen Gründen begrenzt. In einer anderen Ausführung der Erfindung können die Temperaturunterschiedselemente in Reihe angeordnet werden, wie z. B. in Fig 7 drei Stück in dem Gehäuse 3 angeordnet sind. Sie werden in Reihe angeordnet durch Verbindung der kalten Spitze von Element 31 mit dem unteren warmen Boden von Element 32 und der warmen Spitze dieses Elementes 32 mit dem kalten Boden von Element 32. Das Verbindungselement 30 kann ein Metallstab mit einer besonders hohen Wärmeleitfähigkeit sein, z. B. aus Kupfer oder Silber oder es kann ein Temperaturunterschiedselement sein, gefüllt mit einem Gas oder einer Flüssigkeit, welches einen geringeren Temperaturunterschied pro Meter Höhe aufweist als die Elemente 31, 32 und 33. Bei dieser Anordnung ist der Temperaturunterschied zwischen dem Boden von Element 31 und der Spitze von Element 33 wesentlich größer als der Temperaturunterschied von einem einzelnen Element.

**Patentansprüche**

1. Verfahren zur Erzeugung von Temperaturunterschieden in einer festen, gasförmigen oder flüssigen Masse, **dadurch gekennzeichnet, dass** innerhalb eines geschlossenen Systems ein längliches Gefäß (2) mit einem Innenraum angeordnet ist, das die Masse einschließt mit einem Temperaturunterschiedelement innerhalb des Innenraums des Gehäuses in einer senkrechten Anordnung.

2. Verfahren nach Anspruch 1, **dadurch gekennzeichnet, dass** Energie aus dem Temperaturunterschiedelement abgeführt wird.

3. Verfahren nach Anspruch 2, **dadurch gekennzeichnet, dass** zur Abführung von Energie ein Thermoelement an einen senkrechten Abschnitt des Temperaturunterschiedelementes angeordnet ist und Energie in Form von elektrischem Strom, erzeugt durch das Thermoelement (4) auf Grund des Temperaturunterschiedes an diesem vertikalem Segment erzeugt wird.

4. Verfahren nach Anspruch 2, in welchem die Energie durch einen im Innenraum angeordneten Wärmetauscher und durch diesen hindurchgeführtes Wärmeträgermittel entzogen und nach außen abgeführt wird.

5. Verfahren gemäß den Ansprüchen 1 - 4, **dadurch gekennzeichnet, dass** der Innenraum des Gefäßes (2) mit einem durchlässigen Material ausgefüllt wird, welches die Auswirkung von Wärmekonvektionsströmen und Wärmestrahlung in der Masse reduziert.

6. Verfahren nach Anspruch 5, in welchem als durchlässiges Material massive oder hohle Fasern, Pulver, massive oder hohle Feinteile, Sand oder Schaum gewählt wird.

7. Verfahren gemäß den Ansprüchen 1 - 6, **dadurch gekennzeichnet, dass** die Masse aus einem Festkörper besteht und der Innenraum der Kammer evakuiert wird.

8. Verfahren gemäß den Ansprüchen 1 - 7, **dadurch gekennzeichnet, dass** die Kammer mit einem drehbar gelagerten Gehäuse (14) umgeben wird das drehend angetrieben wird.

9. Verfahren gemäß den Ansprüchen 1 - 8, **dadurch gekennzeichnet, dass** das Gehäuse drehbar angeordnet ist, derart, dass es um seine senkrechte Achse gedreht werden kann.

10. Vorrichtung zur Erzeugung von Temperaturunterschieden in einer festen, gasförmigen oder flüssigen Masse, **dadurch gekennzeichnet, dass** innerhalb eines geschlossenen Systems ein längliches Gefäß mit einem Innenraum angeordnet ist, das die Masse einschließt, bestehend aus einem Temperaturunterschiedelement innerhalb des Innenraums des Gehäuses in einer senkrechten Anordnung.

11. Vorrichtung nach Anspruch 10, **dadurch gekennzeichnet, dass** zur Abführung von Energie ein Thermoelement (4) an einen senkrechten Abschnitt des Temperatur-unterschiedselementes angeordnet ist und Energie in Form von elektrischem Strom, erzeugt durch das Thermoelement (4) auf Grund des Temperaturunterschiedes an diesem vertikalen Segment erzeugt wird.

12. Vorrichtung nach Anspruch 10, **dadurch gekennzeichnet, dass** in dem Innenraum Wärmetauscher angeordnet sind und dass durch das durch diese fließende Wärmeträgermittel Energie in Form von Wärme nach außen abgeführt wird.

13. Vorrichtung gemäß den Ansprüchen 10 - 12, **dadurch gekennzeichnet, dass** der Innenraum des Gehäuses (2) mit einem durchlässigen Material ausgefüllt ist, welches die Auswirkung von Wärmekonvektionsströmen und Wärmestrahlung in der Masse reduziert.

14. Vorrichtung nach Anspruch 13, **dadurch gekennzeichnet, dass** als durchlässiges Material massive oder hohle Fasern, Pulver, massive oder hohle Feinteile, Sand oder Schaum benutzt wird.

**15.** Vorrichtung gemäß den Ansprüchen 10 - 14, **dadurch gekennzeichnet, dass** die Masse aus einem Festkörper besteht und der Innenraum des Gefäßes evakuiert ist.

**16.** Vorrichtung gemäß den Ansprüchen 10 - 15, **dadurch gekennzeichnet, dass** das Gefäß (21) von einem drehbar gelagerten Gehäuse (14) mit Drehantrieb umgeben ist.

**17.** Vorrichtung gemäß den Ansprüchen 10 - 16, **dadurch gekennzeichnet, dass** das Gehäuse (21) drehbar um seine horizontale Achse angeordnet ist.

Fig. 1

Fig. 2

Fig. 3

Fig. 4

Fig. 5

Fig. 8

Fig. 6

Fig. 7